# EUROPEAN PATENT APPLICATION

(11) **EP 4 321 422 A1**
(43) Date of publication of application: **14.02.2024**
(21) Application number: 22807307.8
(22) Date of filing: 18.04.2022
(51) Int. Cl.: B63B 35/00, B63B 35/44, B63B 73/00, F03D 13/25

(54) **FLOATING STRUCTURE AND METHOD OF ASSEMBLING FLOATING STRUCTURE**

(30) Priority: 14.05.2021 JP 2021082392
(71) Applicant: Mitsubishi Heavy Industries, Ltd., Tokyo 100-8332 (JP)
(72) Inventor: KATO, Motoki, Tokyo 100-8332 (JP); KARIKOMI, Kai, Tokyo 100-8332 (JP); SUGIMURA, Tadashi, Tokyo 100-8332 (JP); OHTA, Makoto, Tokyo 100-8332 (JP); KAMITANI, Yoichi, Tokyo 100-8332 (JP); MORISHITA, Kunihiro, Tokyo 100-8332 (JP); YUGE, Atsushi, Tokyo 100-8332 (JP)
(74) Representative: Studio Torta S.p.A.
(86) International application number: PCT/JP2022/018009
(87) International publication number: WO 2022/239604

(57) **Abstract**

A floating structure includes: a floating body including one or more buoyant bodies disposed around a structure; and a plurality of first support wires disposed between the structure and the floating body and configured to transmit the self-weight of the structure to the floating body. Each of the first support wires having: one end connected to the floating body; and another end connected to the structure below the one end.

## Description

### TECHNICAL FIELD

This disclosure relates to a floating structure and a method of assembling a floating structure.

The present application claims priority based on Japanese Patent Application No. 2021-082392 filed on May 14, 2021, the entire content of which is incorporated herein by reference.

### BACKGROUND ART

For example, floating structures are used as platforms for offshore drilling for resources of the seabed or as platforms for supporting structures such as towers for offshore wind turbine generators.

Such floating structures include, for example, semi-submersible floating structures (see Patent Document 1).

### Citation List

### Patent Literature

Patent Document 1: JP6336436B

### SUMMARY

### Problems to be Solved

For example, the floating structure described in Patent Document 1 has, e.g., one center column and three outer columns arranged around the center column. In this floating structure, the bottom portion of the center column is connected to the bottom portions of the outer columns by bottom beams, the top portion of the center column is connected to the top portions of the outer columns by top beams, and the top portion of the center column is connected to the bottom portions of the outer columns by struts.

For example, in the floating structure described in Patent Document 1, the bottom and top beams and the struts are rigid bodies and rigid-joined to the center column and the outer columns. Therefore, the bottom and top beams and the struts transfer bending moments between the center column and the outer columns. In addition, since axial compression forces also act on the bottom and top beams, they must be strong enough to prevent buckling, which increases the beam cross-section and increases costs.

In view of the above, an object of at least one embodiment of the present disclosure is to reduce the cost of floating structures.

### Solution to the Problems

(1) A floating structure according to at least one embodiment of the present disclosure includes: a floating body including one or more buoyant bodies disposed around a structure; and a plurality of first support wires disposed between the structure and the floating body and configured to transmit a self-weight of the structure to the floating body. Each of the first support wires has: one end connected to the floating body; and another end connected to the structure below the one end.
(2) A method of assembling a floating structure according to at least one embodiment of the present disclosure includes a step of placing a plurality of first support wires between a structure and a floating body including one or more buoyant bodies disposed around the structure so as to transmit a self-weight of the structure to the floating body. The step of placing the plurality of first support wires includes connecting one end of each of the first support wires to the floating body and connecting another end of each of the first support wires to the structure below the one end.

### Advantageous Effects

According to at least one embodiment of the present disclosure, it is possible to reduce the cost of floating structures.

### BRIEF DESCRIPTION OF DRAWINGS

FIG. 1 is a side view of an offshore structure according to an embodiment.
FIG. 2A is a perspective view of an example of a floating structure according to some embodiments.
FIG. 2B is a side view of an example of a floating structure according to some embodiments, excluding the linking member on the front side of the paper for convenience of explanation.
FIG. 2C is a side view of another example of a floating structure according to some embodiments, excluding the linking member on the front side of the paper for convenience of explanation.
FIG. 3A is a plan view of an example of a floating structure with three buoyant bodies, and a plan view of the floating structure shown in FIGs. 2A and 2B.
FIG. 3B is a plan view of an example of a floating structure with four buoyant bodies.
FIG. 3C is a plan view of an example of a floating structure with five buoyant bodies.
FIG. 3D is a plan view of another example of a floating structure with five buoyant bodies.
FIG. 4A is a plan view of another example of a floating structure with three buoyant bodies.
FIG. 4B is a plan view of another example of a floating structure with four buoyant bodies.
FIG. 4C is a plan view of still another example of a floating structure with five buoyant bodies.
FIG. 4D is a plan view of still another example of a floating structure with five buoyant bodies.
FIG. 5 is a schematic diagram for describing supporting of a column by a floating structure according to some embodiments.
FIG. 6A is a perspective view of another example for the extension directions of second support wires.
FIG. 6B is a side view of the floating structure shown in FIG. 6A, excluding the linking member on the front side of the paper for convenience of explanation.
FIG. 7A is a perspective view of another example for the positional relationship between the lower end position of the column and the position of the other ends of the first support wires.
FIG. 7B is a side view of the floating structure shown in FIG. 7A, excluding the linking member on the front side of the paper for convenience of explanation.
FIG. 8A is a perspective view of another example for the arrangement number of second support wires.
FIG. 8B is a side view of the floating structure shown in FIG. 7A, excluding the linking member on the front side of the paper for convenience of explanation.
FIG. 9 is a perspective view of still another example for the arrangement number of second support wires.
FIG. 10A is a perspective view of an example of a floating structure with an annular member which will be described below.
FIG. 10B is a side view of the floating structure shown in FIG. 10A, excluding the linking member on the front side of the paper for convenience of explanation.
FIG. 10C is a plan view of the floating structure shown in FIG. 10A.
FIG. 10D is a perspective view of another example of a floating structure with an annular member which will be described below.
FIG. 11 is a flowchart showing the process of the method of assembling a floating structure according to some embodiments.
FIG. 12A is a perspective view for describing the process of the method of assembling a floating structure according to some embodiments.
FIG. 12B is a perspective view for describing the process of the method of assembling a floating structure according to some embodiments.
FIG. 12C is a perspective view for describing the process of the method of assembling a floating structure according to some embodiments.
FIG. 12D is a perspective view for describing the process of the method of assembling a floating structure according to some embodiments.
FIG. 12E is a perspective view for describing the process of the method of assembling a floating structure according to some embodiments.

### DETAILED DESCRIPTION

Embodiments of the present disclosure will be described below with reference to the accompanying drawings. It is intended, however, that unless particularly identified, dimensions, materials, shapes, relative positions, and the like of components described in the embodiments shall be interpreted as illustrative only and not intended to limit the scope of the present disclosure.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

Hereinafter, a floating structure according to some embodiments of the present disclosure will be described with reference to the drawings.

A floating structure 10 according to some embodiments can be used in platforms for offshore drilling for resources of the seabed, such as oil platforms, or platforms for supporting structures such as towers for offshore wind turbine generators. Hereinafter, a floating structure according to some embodiments in such offshore structures will be described.

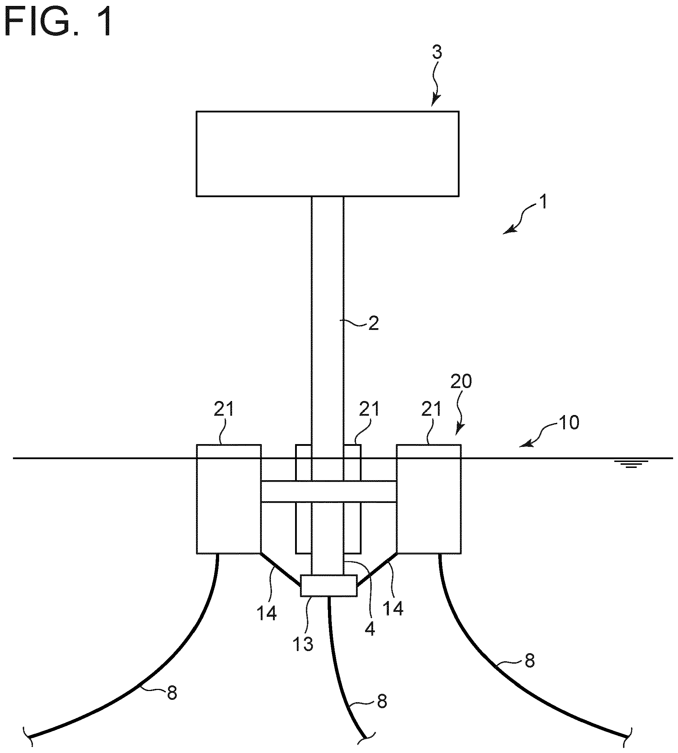

FIG. 1 is a side view of an offshore structure according to an embodiment.

As shown in FIG. 1, an offshore structure 1 according to an embodiment of the present disclosure includes one column 2, an offshore facility 3 installed on the column 2, and a floating structure 10 supporting the column 2 in the sea. Examples of the offshore facility 3 includes drilling rigs, oil production facilities, offshore substations, facilities for workers, etc., and decks on which these facilities are installed. The offshore facility 3 may be a wind turbine section of a wind turbine generator.

The offshore structure 1 is of a floating type and is installed on the ocean by means of the floating structure 10 that floats on the water surface or in the water. The floating structure 10 is moored to the seabed by anchor cables 8. Each anchor cable 8 is fixed at one end to the seabed and connected at the other end to the floating structure 10.

The column 2 has an elongated structure in one direction, and a foundation part 4 of the column 2 is installed on the floating structure 10 so that the axial direction is perpendicular to the installation surface. The column 2 may be, for example, a single cylindrical material, or may consist of multiple elongated materials assembled together.

In the offshore structure 1 according to an embodiment, the entire anchor cables 8 and at least the foundation part 4 of the column 2 are located below the waterline of the floating structure 10, i.e., underwater.

The column 2 supports the offshore facility 3 at the upper end. The column 2 may be composed of an elongated material that primarily bears compressive and bending forces.

The offshore structure 1 according to an embodiment may be configured such that one offshore facility 3 is supported by one column 2 and one floating structure 10, for example, as shown in FIG. 1. Alternatively, the offshore structure 1 according to an embodiment may be configured such that one offshore facility 3 is supported by a plurality of columns 2 and a plurality of floating structures 10, for example. In this case, the plurality of columns 2 and the floating structures 10 may be configured such that one floating structure 10 supports one column 2. The plurality of floating structures 10 may be independent of each other, or at least some of the floating structures 10 may be linked to each other.

### (Floating structure 10)

Next, a floating structure 10 of the offshore structure 1 according to the present embodiment will be described.

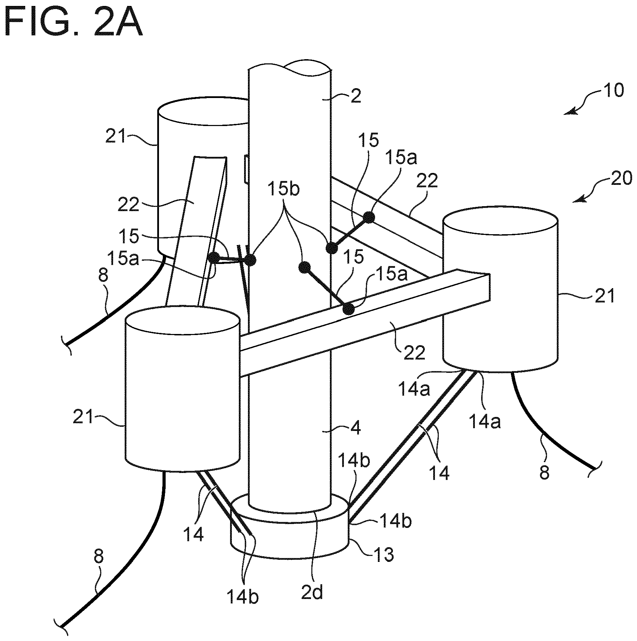

FIG. 2A is a perspective view of an example of a floating structure according to some embodiments.

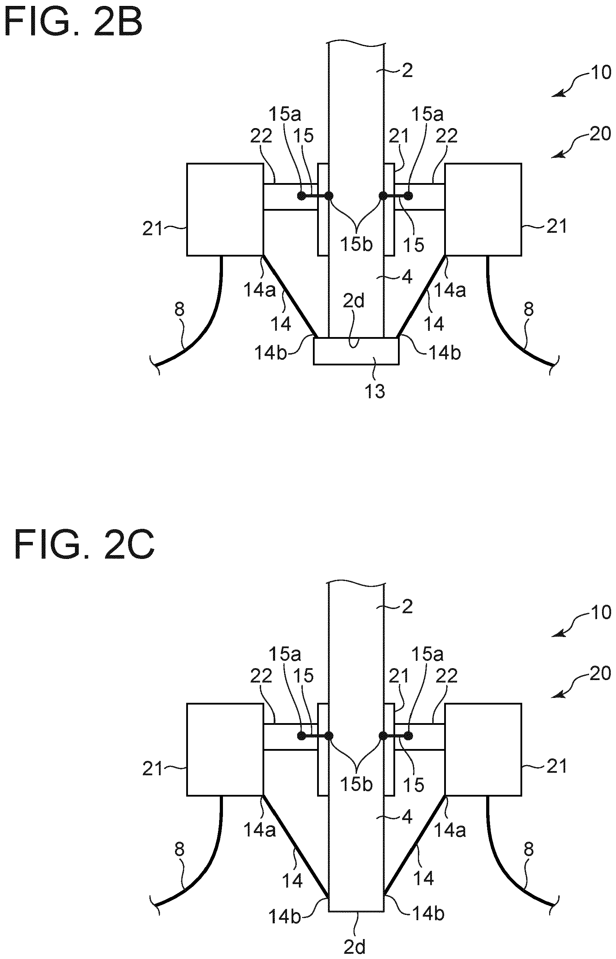

FIG. 2B is a side view of an example of a floating structure according to some embodiments, excluding the linking member on the front side of the paper for convenience of explanation.

FIG. 2C is a side view of another example of a floating structure according to some embodiments, excluding the linking member on the front side of the paper for convenience of explanation.

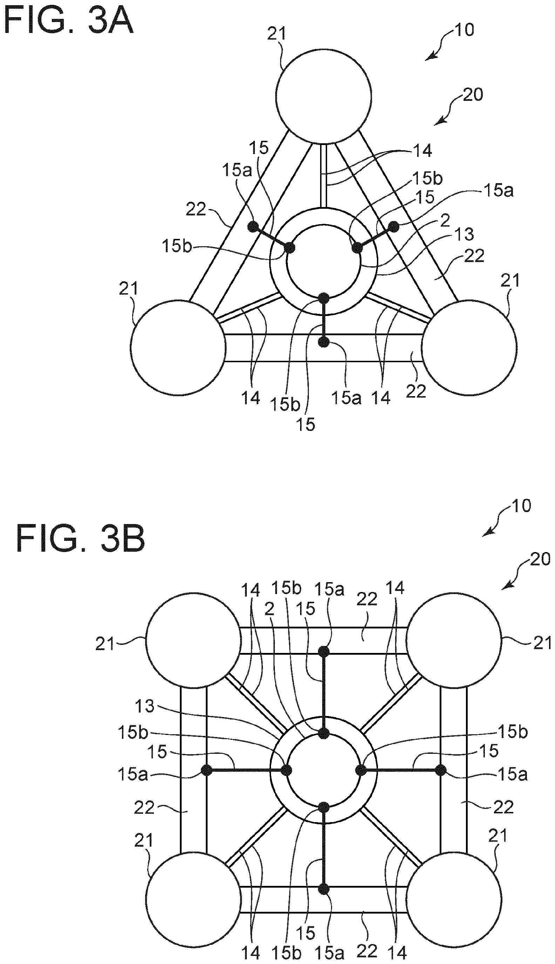

FIG. 3A is a plan view of an example of a floating structure with three buoyant bodies, and a plan view of the floating structure shown in FIGs. 2A and 2B.

FIG. 3B is a plan view of an example of a floating structure with four buoyant bodies.

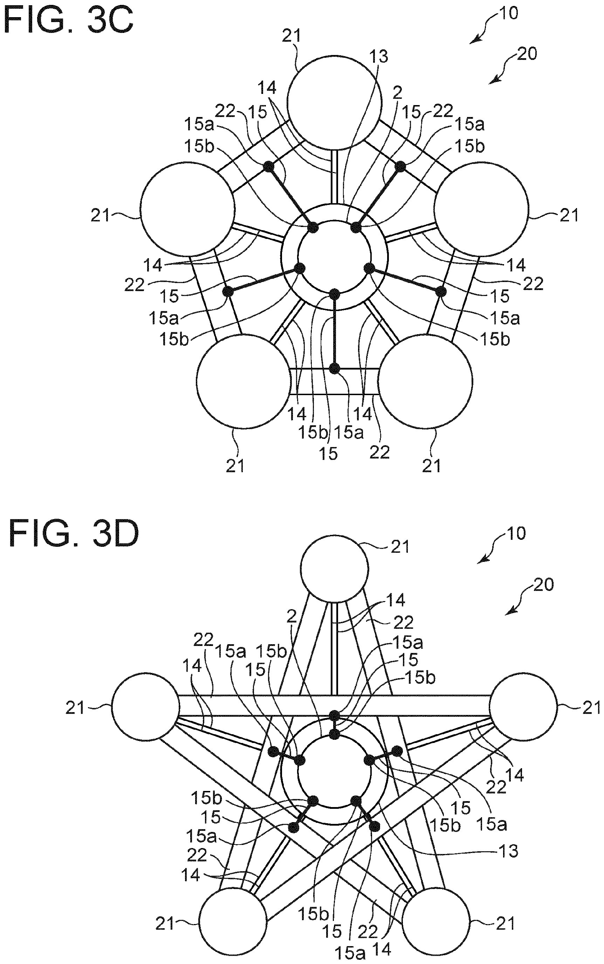

FIG. 3C is a plan view of an example of a floating structure with five buoyant bodies.

FIG. 3D is a plan view of another example of a floating structure with five buoyant bodies.

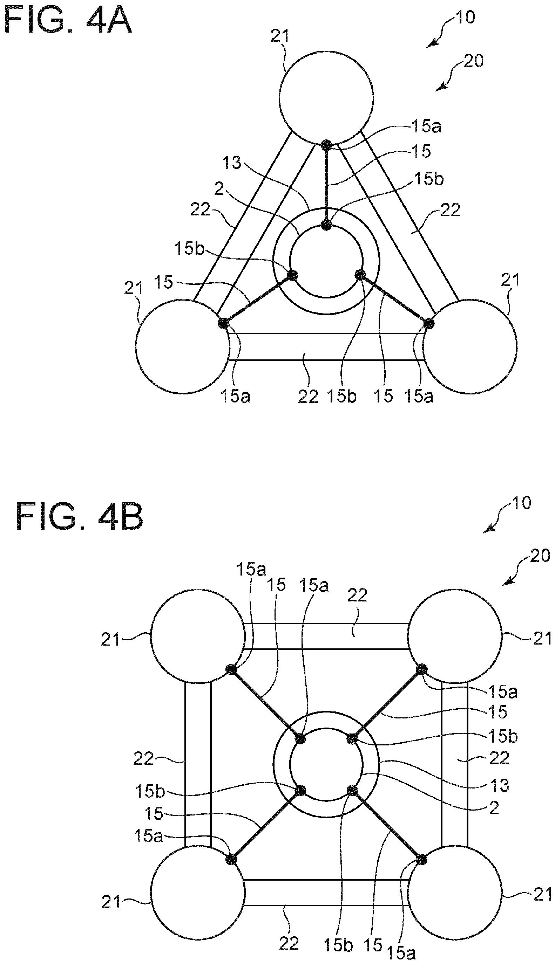

FIG. 4A is a plan view of another example of a floating structure with three buoyant bodies.

FIG. 4B is a plan view of another example of a floating structure with four buoyant bodies.

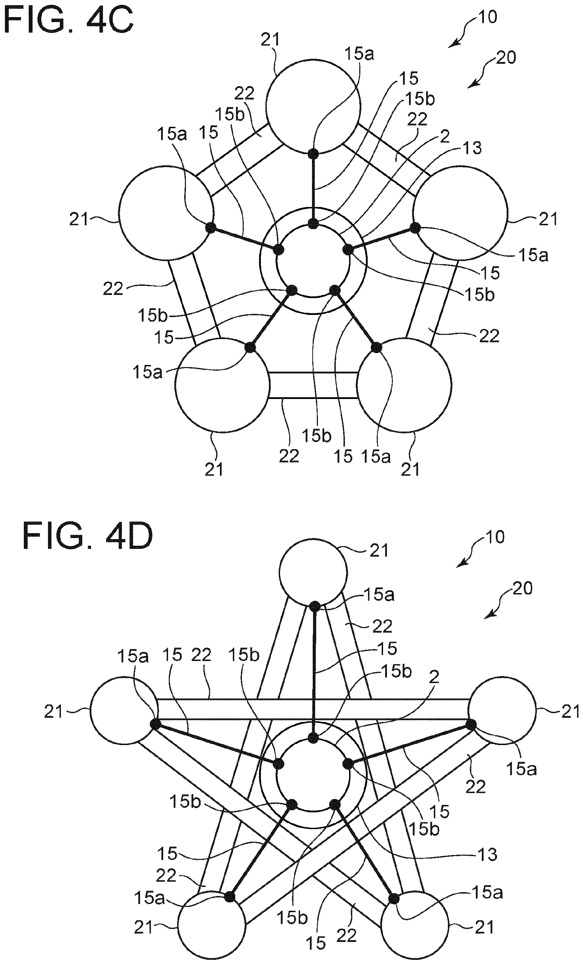

FIG. 4C is a plan view of still another example of a floating structure with five buoyant bodies.

FIG. 4D is a plan view of still another example of a floating structure with five buoyant bodies.

The floating structure 10 according to some embodiments is provided with a floating body 20, a support base 13, a plurality of first support wires 14, and a plurality of second support wires 15, as shown in FIGs. 2A through 2C, 3A through 3D, and 4A through 4D.

In the floating structure 10 according to some embodiments, the floating body 20 includes one or more buoyant bodies 21 disposed around the column 2 which is the structure subject to support by the floating structure 10, as shown in FIGs. 2A through 4D.

Each of the buoyant bodies 21 is capable of floating on the water surface or in the water, and they are arranged in the circumferential direction around the column 2 on the radially outer side of the column 2. Three buoyant bodies 21 may be installed, or three or more buoyant bodies 21 may be installed, as long as they can support the column 2 in a well-balanced manner. FIGs. 2A through 2C, 3A, and 4A show the case where three buoyant bodies 21 are installed; FIGs. 3B and 4B show the case where four buoyant bodies 21 are installed; and FIGs. 3C, 3D, 4C, and 4D show the case where five buoyant bodies 21 are installed.

In the floating structure 10 according to some embodiments, the floating body 20 may include a single buoyant body having a hollow cylindrical shape or a hollow polygonal shape in plan view, for example, or may include a plurality of buoyant bodies having a hollow cylindrical shape or a hollow polygonal shape that is divided at several circumferential positions in plan view.

The following description of the floating structure 10 according to some embodiments will focus on the case where three buoyant bodies 21 are installed, as shown in FIGs. 2A through 2C, 3A, and 4A.

### (Floating body 20)

In the floating structure 10 according to some embodiments, the floating body 20 has a linking member 22 linking and securing a plurality of buoyant bodies 21. The linking member 22 is rigid-joined at one end to one buoyant body (also referred to as the first buoyant body 21) of the plurality of buoyant bodies 21 and rigid-joined at the other end to another buoyant body (also referred to as the second buoyant body 21) of the plurality of buoyant bodies 21. The linking member 22 primarily bear forces (bending, compressive, tensile, etc.) acting between the buoyant bodies.

Although not shown, the linking member 22 may be a member with a truss structure or rahmen structure or may be a mold steel so that the relative positions of the buoyant bodies 21 do not change due to forces acting on them.

With the floating structure 10 according to some embodiments, the column 2 can be stably supported by the plurality of buoyant bodies 21.

In the floating body 20 according to some embodiments, as shown in FIGs. 2A through 2C, 3A through 3C, and 4A through 4C, for each of the plurality of buoyant bodies 21 arranged around the column 2 at intervals in the circumferential direction in plan view, circumferentially adjacent buoyant bodies 21 may be linked to each other by the linking member 22. Alternatively, in the floating body 20 according to some embodiments, as shown in FIGs. 3D and 4D, one buoyant body may be linked to a buoyant body 21 that is not next to it but two away in the circumferential direction. That is, in the floating body 20 according to some embodiments, when the plurality of buoyant bodies 21 are secured as a single unit, one buoyant body 21 may be linked to any one or more of the other buoyant bodies 21.

### (Support base 13)

The support base 13 is disposed in the middle of the plurality of buoyant bodies 21 and supports the foundation part 4 at the lower end of the column 2. The support base 13 supports the lower end of the column 2 below the lower ends of the buoyant bodies 21. In other words, the lower part of the column 2 extends below the linking members 22 through the area where the column 2 is surrounded by the plurality of buoyant bodies 21 and the linking members 22, so that the center of gravity of the column 2 is lowered. This ensures stability against oscillation even when the height of the buoyant bodies 21 themselves is small. Thus, the time and cost required to manufacture the buoyant bodies 21 can be reduced.

### (First support wire 14)

Each of the first support wires 14 is a linear member disposed between the column 2 and the floating body 20 and configured to transmit the self-weight of the column 2 to the floating body 20, and each is connected at one end 14a to the floating body 20.

As shown in FIGs. 2A through 2C, the first support wire 14 may be connected at one end 14a to the lower portion of the buoyant body 21 of the floating body 20.

Further, as shown in FIGs. 2A and 2B, the first support wire 14 may be connected at the other end 14b to the support base 13 below the one end 14a. That is, the first support wire 14 may be connected at the other end 14b to the lower portion of the column 2 via the support base 13. As shown in FIG. 2C, the first support wire 14 may be connected at the other end 14b directly to the foundation part 4 of the column 2 below the one end 14a.

Thus, the first support wire 14 may be connected at the other end 14b directly or indirectly to the column 2 below the one end 14a.

The first support wire 14 bears the tensile force primarily. The first support wire 14 may have a stranded wire structure. Thereby, the deformation caused by the expansion and contraction of the first support wire 14 loads damping on the column 2 and the floating body 20. As a result, the effect of suppressing the oscillation generated in the column 2 and the floating body 20 is achieved.

The first support wires 14 are installed between the buoyant bodies 21 or the linking members 22 and the column 2, for example, two wires each, as shown in FIG. 2A. The number of first support wires 14 installed at each location is not limited to this example, and may be one each, or three or more each. For fail-safe purposes, spare first support wires (not shown) may be installed alongside the first support wires 14.

With the floating structure 10 according to some embodiments, the self-weight of the column 2 as the structure is transmitted to the floating body by axial tension forces of the first support wires 14, and the damage of the first support wires 14 due to bending moments and axial compression forces of the first support wires 14 need not be considered. This simplifies the configuration of members for transmitting the self-weight of the column 2 to the floating body and also eliminates the need to unnecessarily increase the cross-sectional area of the first support wires 14, thereby reducing the cost of the floating structure 10.

The floating structure 10 according to some embodiments is configured to support the column 2 of the offshore structure 1, which helps to reduce the cost of the floating structure 10 in the offshore structure 1.

The offshore structure 1 according to an embodiment is equipped with the floating structure 10 according to some embodiments, which helps to reduce the cost of the offshore structure 1.

### (Second support wire 15)

Each of the second support wires 15 is a linear member connected to the column 2 above the one end 14a of the first support wire 14 and configured to prevent the column 2 from falling over.

In the floating body 20 according to some embodiments, each of the second support wires 15 has a proximal end 15a and a distal end 15b. Each proximal end 15a is connected to the floating body 20 above the one end 14a of the first support wire 14, and each distal end 15b is connected to the column 2 above the one end 14a of the first support wire 14.

As shown in FIGs. 3A through 3D, the second support wire 15 may be connected at the proximal end 15a to the linking member 22 of the floating body 20.

Alternatively, as shown in FIGs. 4A through 4D, the second support wire 15 may be connected at the proximal end 15a to the buoyant body 21 of the floating body 20.

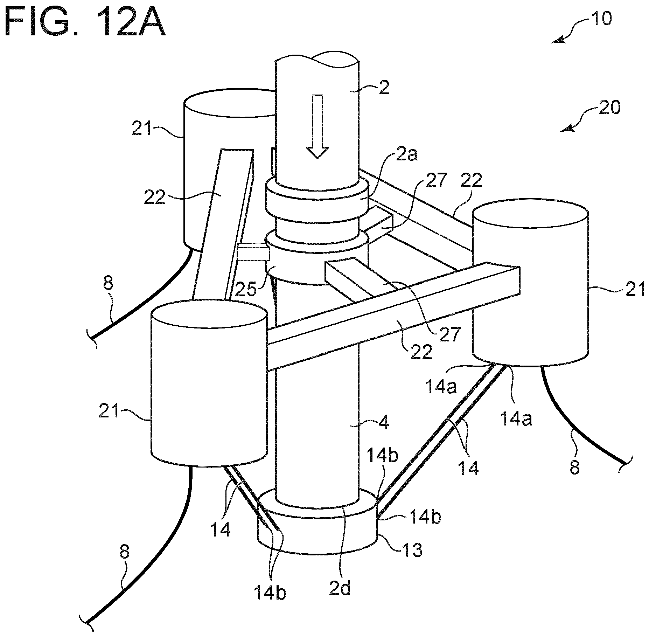

As shown in FIGs. 3A through 3D and 4A through 4D, the second support wire 15 may be connected at the distal end 15b directly to the column 2. As shown in FIGs. 12A through 12E, which will be described below, the second support wire 15 may be connected at the distal end 15b to the column 2 via an attachment part 2a disposed on the outer periphery of the column 2.

Thus, the second support wire 15 may be connected directly or indirectly to the column 2 above the one end 14a of the first support wire 14.

The second support wire 15 bears the tensile force primarily. The second support wire 15 may have a stranded wire structure. Thus, the second support wire 15 resists horizontal movement, such as tipping over of the column 2, reducing the oscillation generated in the column 2 and the floating body 20.

With the floating structure 10 according to some embodiments, since the column 2 as the structure is prevented from falling over by axial tension forces of the second support wires 15, the damage of the second support wires 15 due to bending moments and axial compression forces of the second support wires 15 need not be considered. This simplifies the configuration of members for preventing the column from falling over compared to the configuration where the column 2 is prevented from falling over by connecting columnar members to the column 2 at one ends 14a of the first support wires 14, and also eliminates the need to unnecessarily increase the cross-sectional area of the second support wires 15, thereby reducing the cost of the floating structure 10.

In the floating body 20 according to some embodiments, as shown in FIGs. 3A through 3D and 4A through 4D, in plan view, the second support wires 15 may be arranged so as to extend radially around the column 2. This allows the plurality of second support wires 15 to support the column 2 so that it does not fall over.

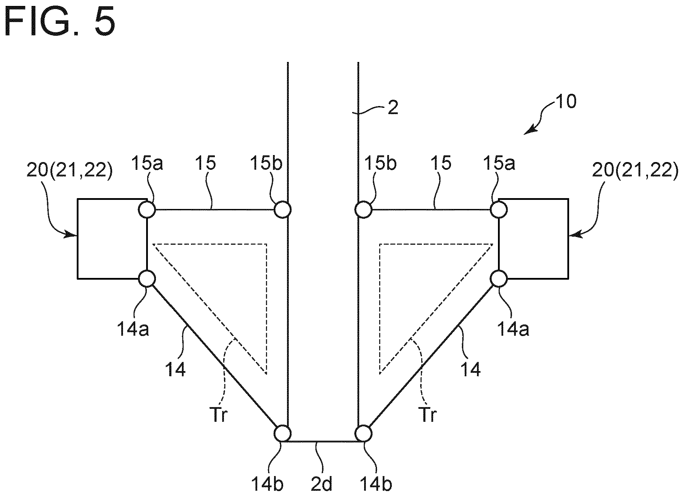

FIG. 5 is a schematic diagram for describing supporting of a column by a floating structure according to some embodiments.

As shown in FIG. 5, in the floating structure 10 according to some embodiments, the column 2 is connected to the floating body 20 by the plurality of first support wires 14 and the plurality of second support wires 15, which are axial force members and are pin-joined at both ends.

In the floating structure 10 according to some embodiments, since the plurality of buoyant bodies 21 are connected to each other by the linking members 22, changes in the relative positions between the buoyant bodies 21 and between the buoyant body 21 and the linking member 22 are relatively small.

In other words, in the floating structure 10 according to some embodiments, since the column 2, the plurality of first support wires 14, and the plurality of second support wires 15 always form a truss structure as shown by the dashed triangle Tr in FIG. 5, the column 2 is stable even when the top and bottom of the column 2 are connected by the first support wires 14 and the second support wires 15 which are pin-jointed at both ends.

### (Initial tension of second support wire 15)

In the floating structure 10 according to some embodiments, the second support wires 15 may be initially tensioned, i.e., pre-tensioned.

This prevents the second support wires 15 from experiencing axial force loss due to wire deflection even when compressive forces act on them. In other words, the second support wires 15 in the direction in which the column 2 falls over also resist falling over of the column 2, so that the column 2 can be stably supported by the floating body 20.

### (Extension direction of second support wire 15)

In the floating structure 10 according to some embodiments, as shown in FIGs. 2A through 2C, the height position of the distal end 15b of the second support wire 15 may be substantially the same as the height position of the proximal end 15a of the second support wire 15.

This makes it difficult for the tension of the second support wire 15 to act on the column 2 in the vertical direction, thereby reducing the load on the column 2.

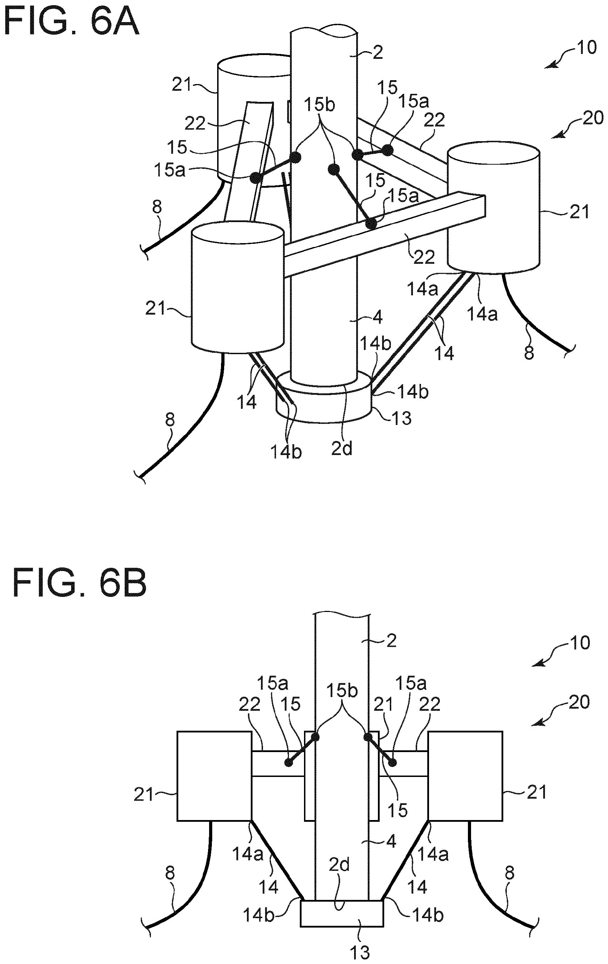

FIG. 6A is a perspective view of another example for the extension directions of second support wires.

FIG. 6B is a side view of the floating structure shown in FIG. 6A, excluding the linking member on the front side of the paper for convenience of explanation.

As shown in FIGs. 6A and 6B, the height position of the distal end 15b of the second support wire 15 may be higher than the height position of the proximal end 15a of the second support wire 15.

This allows the tension of the second support wire 15 to act downward on the column 2 and thus makes it difficult for the column 2 to move upward with respect to the floating body 20, thereby suppressing the vertical oscillation of the column 2 with respect to the floating body 20.

### (Positional relationship between lower end position of column and position of other end of first support wire)

In the floating structure 10 according to some embodiments, as shown in FIGs. 2A through 2C, 6A, and 6B, the position of the other end 14b of the first support wire 14 may be near the lower end 2d of the column 2. In other words, in the floating structure 10 according to some embodiments, the lower end 2d of the column 2 may be substantially the same as the position of the other end 14b of the first support wire 14.

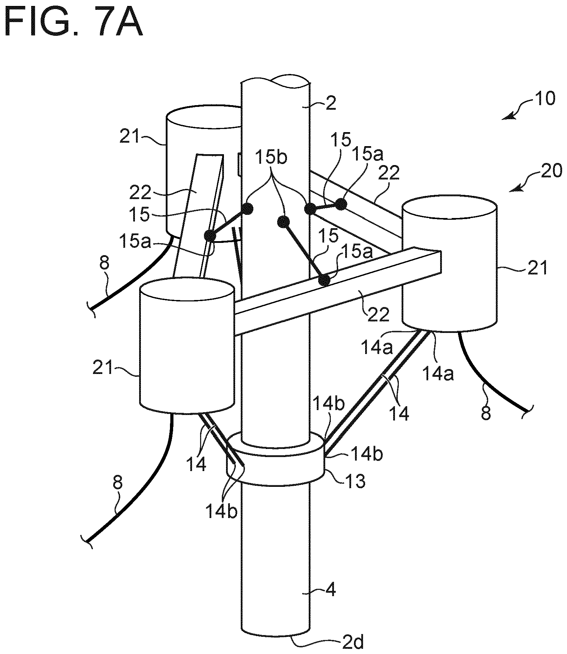

FIG. 7A is a perspective view of another example for the positional relationship between the lower end position of the column and the position of the other ends of the first support wires.

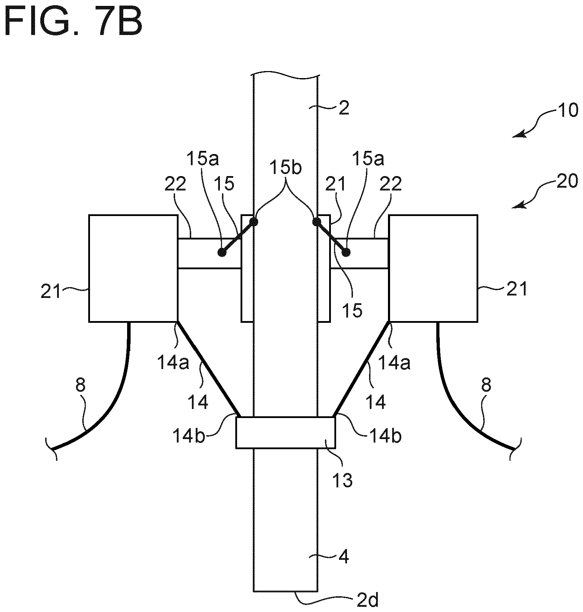

FIG. 7B is a side view of the floating structure shown in FIG. 7A, excluding the linking member on the front side of the paper for convenience of explanation.

In the floating structure 10 according to some embodiments, as shown in FIGs. 7A and 7B, the position of the other end 14b of the first support wire 14 may be above the foundation part 4 of the column 2.

For example, in the floating structure 10 shown in FIGs. 7A and 7B, the foundation part 4 may be located below the support base 13.

By setting the position of the lower end 2d of the column 2 lower than that in the embodiments shown in FIGs. 2A through 2C, 6A, and 6B, the center of gravity of the column 2 is lowered, so that the oscillation of the column 2 can be suppressed.

### (Arrangement number of second support wires)

In the floating structure 10 according to some embodiments, as shown in FIGs. 3A through 3D, and 4A through 4D, one linking member 22 or one buoyant body 21 may be connected to the column 2 by one second support wire 15 each.

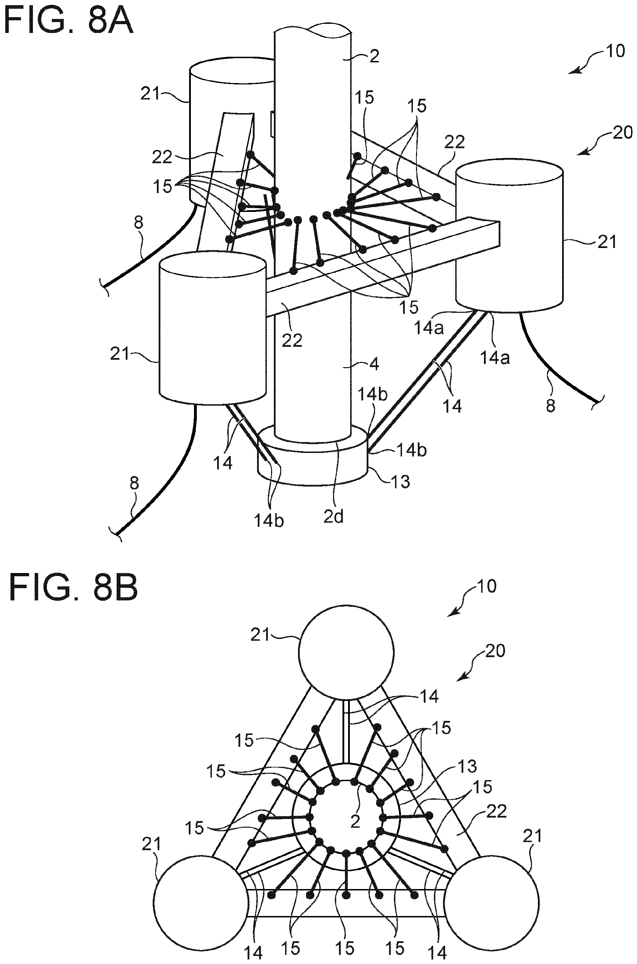

FIG. 8A is a perspective view of another example for the arrangement number of second support wires.

FIG. 8B is a side view of the floating structure shown in FIG. 7A, excluding the linking member on the front side of the paper for convenience of explanation.

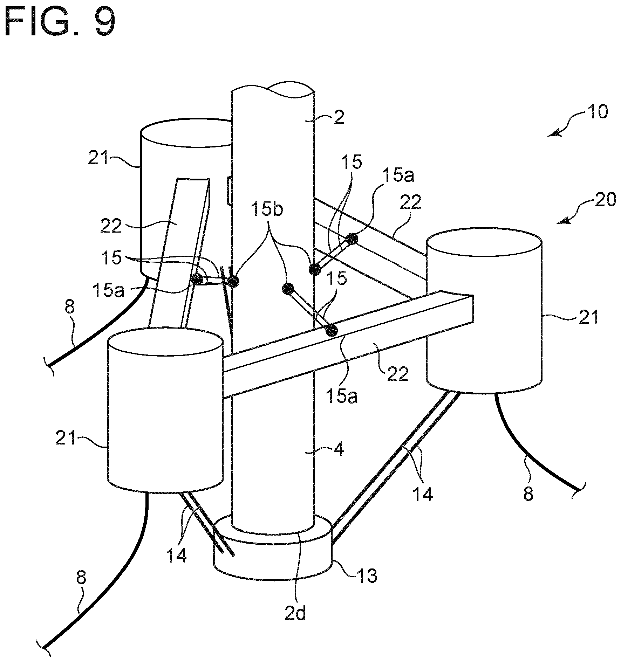

FIG. 9 is a perspective view of still another example for the arrangement number of second support wires.

In the floating structure 10 according to some embodiments, as shown in FIGs. 8A and 8B, one linking member 22 may be connected to the column 2 by more than one second support wire 15. Further, these second support wires 15 may be arranged to extend radially around the column 2. Although not shown, one buoyant body 21 may be connected to the column 2 by more than one second support wire 15.

As shown in FIGs. 8A and 8B, by connecting one linking member 22 to the column 2 by more than one second support wire 15 and setting the positions of the proximal ends 15a of the second support wires 15 so that they are spaced apart along the extension direction of the linking member 22, the positions where the tensile force from each second support wire 15 acts on the linking member 22 are distributed along the extension direction of the linking member 22, so the strength required for the linking member 22 is not unnecessarily increased.

Additionally, the wire diameters of the individual second support wires 15 can be made relatively small, which facilitates the work of connecting the second support wires 15 to the linking member 22 and the column 2.

Furthermore, by connecting one buoyant body 21 to the column 2 by more than one second support wire 15, even if some of the second support wires 15 are damaged, the other second support wires 15 can maintain the connection between the buoyant body 21 to the column 2.

Further, in the floating structure 10 according to some embodiments, as shown in FIG. 9, the second support wire 15 connecting one linking member 22 to the column 2 may be multiplexed. FIG. 9 shows an example where the second support wire 15 connecting one linking member 22 to the column 2 is multiplexed. Specifically, in the floating structure 10 according to some embodiments, as shown in FIG. 9, more than one second support wire 15 may be connected at one connection point between the linking member 22 and the second support wire 15, and more than one second support wire 15 may be connected at one connection point between the column 2 and the second support wire 15.

Thereby, even if some of the second support wires 15 are damaged, the other second support wires 15 can maintain the connection between the buoyant body 21 to the column 2.

### (Annular member)

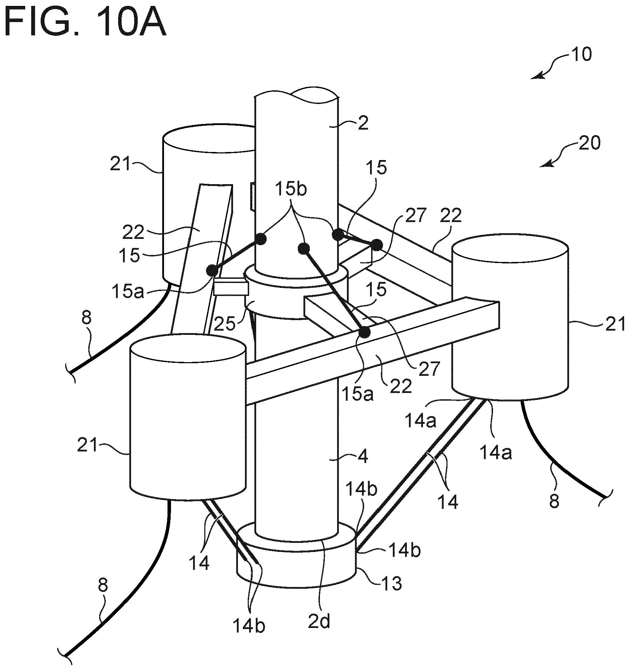

FIG. 10A is a perspective view of an example of a floating structure with an annular member which will be described below.

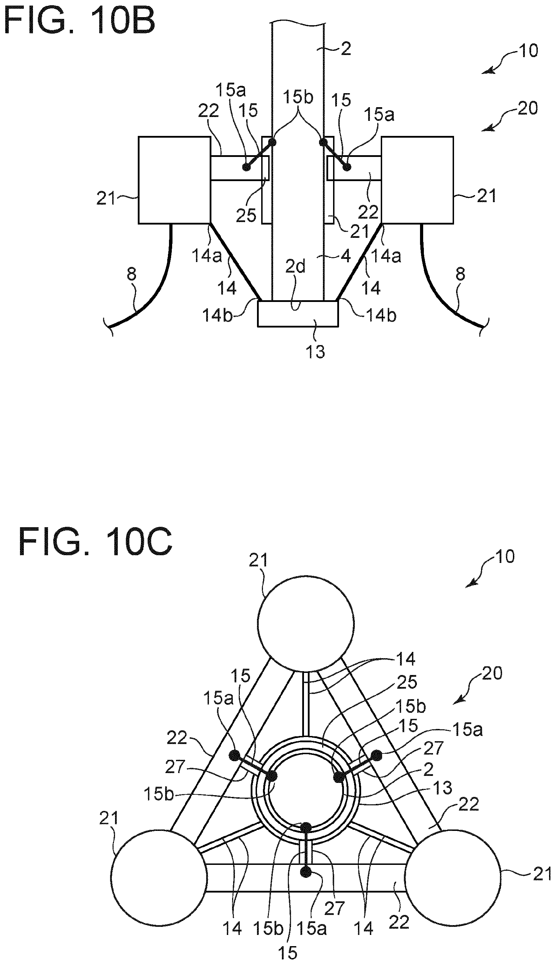

FIG. 10B is a side view of the floating structure shown in FIG. 10A, excluding the linking member on the front side of the paper for convenience of explanation.

FIG. 10C is a plan view of the floating structure shown in FIG. 10A.

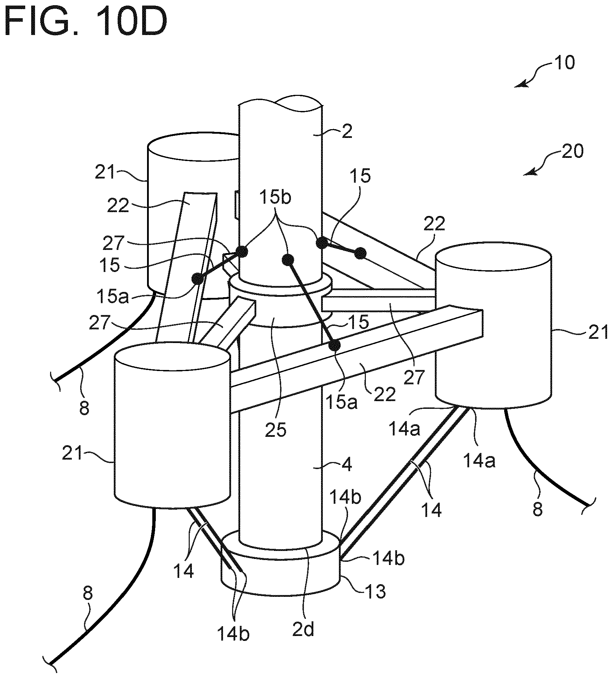

FIG. 10D is a perspective view of another example of a floating structure with an annular member which will be described below.

The floating structure 10 according to some embodiments may include an annular member 25 surrounding the column 2 and attached to the floating body 20 so that the annular member 25 is in non-contact with the column 2, as shown in FIGs. 10A through 10D.

More specifically, the annular member 25 according to some embodiments is an annular member having an inner circumference larger than the outer circumference of the column 2. For example, when the column 2 has a circular cross-sectional shape of the outer circumference when cut in the horizontal direction, the annular member 25 according to some embodiments is an annular member having an inner diameter larger than the outer diameter of the column 2. The annular member 25 according to some embodiments may have a circular outer shape in plan view. In the following description, the annular members 25 according to some embodiments will be described as having a circular shape.

The annular member 25 shown in FIGs. 10A through 10C is rigid-joined to the linking members 22 by connecting members 27 that connects the outer circumference of the annular member 25 to the sides of the linking members 22 facing the column 2.

In the annular member 25 shown in FIG. 10D, the connecting member 27 is rigid-joined to the side of each buoyant body 21 instead of the linking member 22.

The inner circumference of the annular member 25 according to some embodiments is sized so that it does not come into contact with the outer circumference of the column 2 unless it is subjected to a load that exceeds the design assumptions, for example, stormy weather beyond expectations.

In the floating structure 10 shown in FIGs. 10A through 10C, since the annular member 25 is attached to the linking member 22 to reinforce the linking member 22 against inward bending behavior, the design strength of the linking member 22 can be suppressed.

Further, in the floating structure 10 shown in FIGs. 10A through 10C, contact between the column 2 and the annular member 25 can be suppressed even when the column 2 oscillates. In addition, if a larger-than-expected load acts on the column 2 and the annular member 25 contacts the column 2, the annular member 25 will also support the column 2, thereby suppressing the oscillation of the column 2 even if a larger-than-expected load acts on the column 2.

In the floating structure 10 shown in FIG. 10D, contact between the column 2 and the annular member 25 can be suppressed even when the column 2 oscillates. In addition, if a larger-than-expected load acts on the column 2 and the annular member 25 contacts the column 2, the annular member 25 will also support the column 2, thereby suppressing the oscillation of the column 2 even if a larger-than-expected load acts on the column 2.

Further, in the floating structure 10 shown in FIG. 10D, if the floating structure 10 has, for example, two or more buoyant bodies 21, the buoyant bodies 21 can be connected to each other via the annular member 25. Further, if two or more buoyant bodies 21 are connected and secured to each other by the linking member 22, the annular member 25 can reduce the load on the linking member 22, and the design strength of the linking member 22 can be suppressed.

### (Method of assembling floating structure)

Hereinafter, a method of assembling a floating structure will be described.

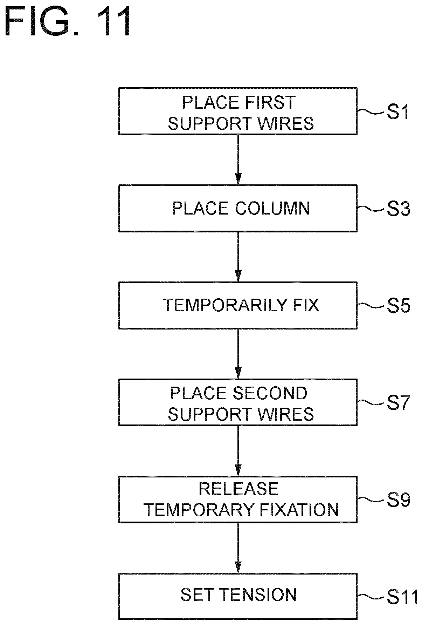

FIG. 11 is a flowchart showing the process of the method of assembling a floating structure according to some embodiments.

FIGs. 12A through 12E are each a perspective view for describing the process of the method of assembling a floating structure according to some embodiments.

The method of assembling a floating structure according to some embodiments includes a step S1 of placing first support wires, a step S3 of placing a column, a temporary fixation step S5, a step S7 of placing second support wires, a temporary fixation releasing step S9, and a tension setting step S11.

The following description will take as an example the method of assembling the floating structure 10 including the annular member 25 rigid-joined to the linking members 22, as shown in FIGs. 10A through 10C.

In the following description, as shown in FIGs. 12A to 12E, it is assumed that an attachment part 2a for attaching the distal end 15b of the second support wire 15 is disposed on the outer periphery of the column 2.

### (Step S 1 of placing first support wires)

The step S 1 of placing first support wires is a step of placing a plurality of first support wires 14 between the column 2 and the floating body 20 including one or more buoyant bodies 21 disposed around the column 2 so as to transmit the self-weight of the column 2 to the floating body 20.

In the step S 1 of placing first support wires, one end 14a of each first support wire 14 is connected to the floating body 20, and the other end 14b is connected to the column 2 below the one end 14a.

The floating body 20 shall have an annular member 25 rigid-connected to the linking members 22 in advance.

In the step S 1 of placing first support wires, for example, one end 14a of the first support wire 14 may be connected to the lower portion of the buoyant body 21 and the other end 14b of the first support wire 14 may be connected to the support base 13, as described above.

In the method of assembling a floating structure according to some embodiments, by performing the step S 1 of placing first support wires, the floating structure 10 can be assembled by a process that is relatively easy to implement, so that the installation cost of the floating structure 10 can be reduced.

### (Step S3 of placing column)

The step S3 of placing a column is a step of placing a column 2 on the floating structure 10 in which the first support wires 14 have been placed by performing the step S 1 of placing first support wires.

For example, as shown in FIG. 12A, in the step S3 of placing a column, the column 2 is inserted into the inner circumference of the annular member 25 from above the floating body 20 to support the column 2 by the support base 13.

### (Temporary fixation step S5)

The temporary fixation step S5 is a step of prohibiting relative movement of the column 2 and the floating body 20 prior to the step S7 of placing second support wires.

In the temporary fixation step S5, a wedge or the like is inserted into the gap between the inner circumference of the annular member 25 and the outer circumference of the column 2 to temporarily fix the floating body 20 and the column 2.

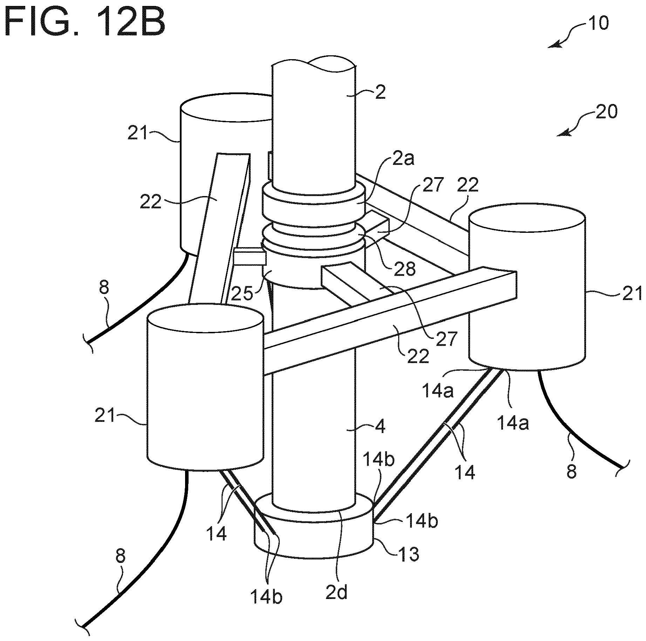

For example, as shown in FIG. 12B, in the temporary fixation step S5, a wedge 28 is inserted into the gap between the inner circumference of the annular member 25 and the outer circumference of the column 2 while the column 2 is supported by the support base 13.

This allows centering of the column 2 and prevents misalignment of the floating body 20 and the column 2 in the subsequent step, making it easier to connect the second support wires 15 to the column 2.

### (Step S7 of placing second support wires)

The step S7 of placing second support wires is a step of connecting a plurality of second support wires 15 to the column 2 above the one ends 14a of the first support wires 14 to prevent the column 2 from falling over.

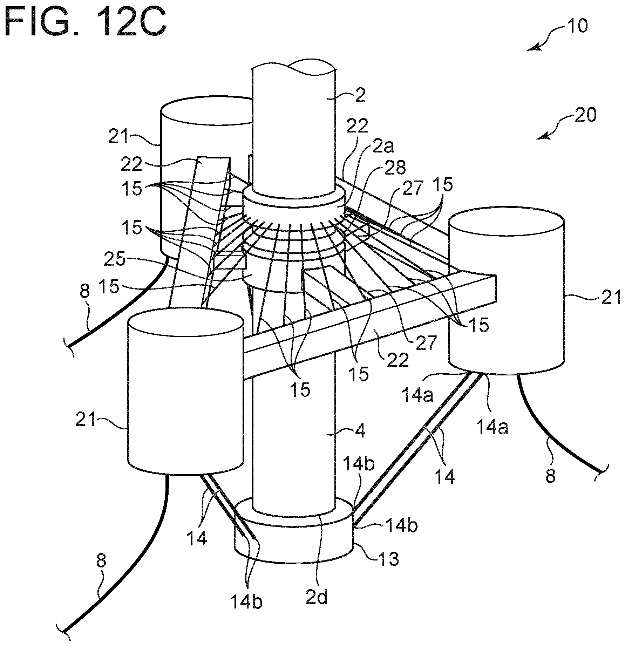

For example, as shown in FIG. 12C, in the step S7 of placing second support wires, one linking member 22 is connected to the column 2 by more than one second support wire 15, and each second support wire is placed so that the positions of the proximal ends 15a of the second support wires 15 are spaced apart along the extension direction of the linking member 22.

By placing the second support wires, the risk of the column 2 falling over is reduced.

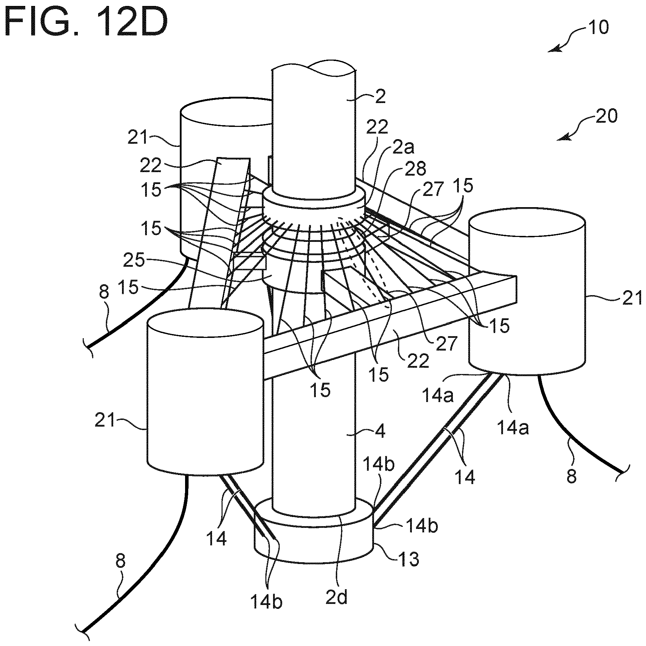

In the step S7 of placing second support wires, for example, as shown in FIG. 12D, of the plurality of second support wires 15 spaced along the extension direction of the linking member 22, initial tension may be applied to one second support wire 15 in the vicinity of the center position of the length along the extension direction of the linking member 22, which is enclosed by the dashed oval in FIG. 12D. This initial tensioning is performed, for example, for each of the three linking members 22 shown in the figure. The magnitude of the initial tension applied at this time is equivalent to the tensile force acting between the linking member 22 and the annular member 25 at the time the assembly of the floating structure 10 is completed.

### (Temporary fixation releasing step S9)

The temporary fixation releasing step S9 is a step of lifting the prohibition on relative movement of the column 2 and the floating body 20 after the step S7 of placing second support wires.

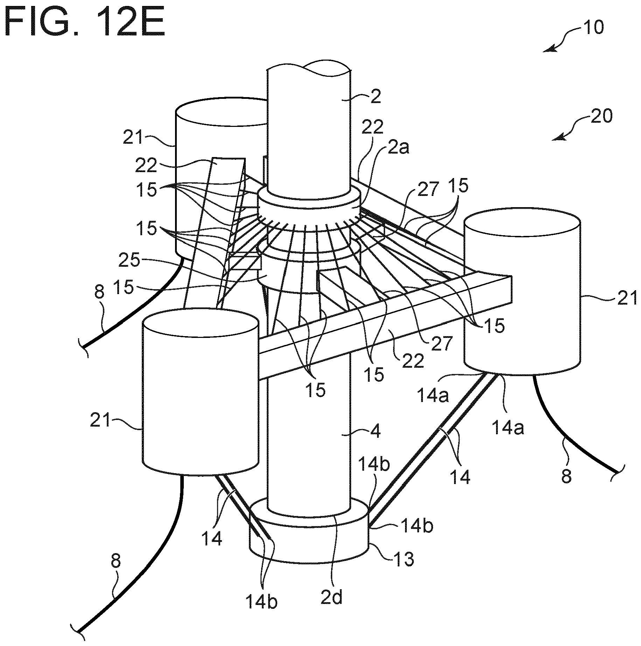

For example, as shown in FIG. 12E, in the temporary fixation releasing step S9, the wedge 28 inserted into the gap between the inner circumference of the annular member 25 and the outer circumference of the column 2 in the temporary fixation step S5 is removed.

### (Tension setting step S11)

The tension setting step S 11 is a step of setting (applying) tension to all the second support wires 15.

In the tension setting step S 11, the tension of all the second support wires 15 is adjusted to an appropriate level by decreasing the tension of the second support wire 15 that has been initially tensioned in the step S7 of placing second support wires while repeating the process of tensioning the other second support wires 15 as appropriate.

The present disclosure is not limited to the embodiments described above, but includes modifications to the embodiments described above, and embodiments composed of combinations of those embodiments.

The contents described in the above embodiments would be understood as follows, for instance.
(1) A floating structure 10 according to at least one embodiment of the present disclosure includes: a floating body 20 including one or more buoyant bodies 21 disposed around a column 2 as a structure; and a plurality of first support wires 14 disposed between the column 2 as the structure and the floating body 20 and configured to transmit the self-weight of the column 2 as the structure to the floating body 20. Each of the first support wires 14 has: one end 14a connected to the floating body 20; and another end 14b connected to the column 2 as the structure below the one end 14a.

With the above configuration (1), the self-weight of the column 2 as the structure is transmitted to the floating body 20 by axial tension forces of the first support wires 14, and the damage of the first support wires 14 due to bending moments and axial compression forces of the first support wires 14 need not be considered. This simplifies the configuration of members for transmitting the self-weight of the column 2 to the floating body and also eliminates the need to unnecessarily increase the cross-sectional area of the first support wires 14, thereby reducing the cost of the floating structure 10.

(2) In some embodiments, in the above configuration (1), the floating structure may include a plurality of second support wires 15 connected to the column 2 as the structure above the one end 14a and configured to prevent the column 2 as the structure from falling over.

With the above configuration (2), since the column 2 as the structure is prevented from falling over by axial tension forces of the second support wires 15, the damage of the second support wires 15 due to bending moments and axial compression forces of the second support wires 15 need not be considered. This simplifies the configuration of members for preventing the column 2 from falling over compared to the configuration where the column 2 is prevented from falling over by connecting columnar members to the column 2 above the one ends 14a, and also eliminates the need to unnecessarily increase the cross-sectional area of the second support wires 15, thereby reducing the cost of the floating structure 10.

(3) In some embodiments, in the above configuration (2), the one or more buoyant bodies 21 may include at least a first buoyant body 21 and a second buoyant body 21. The floating body 20 may have a linking member 22 linking and securing the first buoyant body 21 and the second buoyant body 21.

With the above configuration (3), the column 2 as the structure can be stably supported by the plurality of buoyant bodies 21.

(4) In some embodiments, in the above configuration (2) or (3), each of the plurality of second support wires 15 has a proximal end 15a and a distal end 15b. Each proximal end 15a may be connected to the buoyant body 21 above the one end 14a, and each distal end 15b may be connected to the column 2 as the structure above the one end 14a.

With the above configuration (4), by arranging the plurality of second support wires 15 to extend radially around the column 2 as the structure and connecting them to the buoyant bodies 21, the column 2 can be supported to prevent it from falling over.

(5) In some embodiments, in the above configuration (3), each of the plurality of second support wires 15 has a proximal end 15a and a distal end 15b. Each proximal end 15a may be connected to the linking member 22 above the one end 14a, and each distal end 15b may be connected to the column 2 as the structure above the one end 14a.

With the above configuration (5), by arranging the plurality of second support wires 15 to extend radially around the column 2 as the structure and connecting them to the linking members 22, the column 2 can be supported to prevent it from falling over.

(6) In some embodiments, in the above configuration (4) or (5), the height position of the distal end 15b may be substantially the same as the height position of the proximal end 15a.

The above configuration (6) makes it difficult for the tension of the second support wire 15 to act on the column 2 as the structure in the vertical direction, thereby reducing the load on the column 2.

(7) In some embodiments, in the above configuration (4) or (5), the height position of the distal end 15b may be higher than the height position of the proximal end 15a.

The above configuration (7) allows the tension of the second support wire 15 to act downward on the column 2 as the structure and thus makes it difficult for the column 2 to move upward with respect to the floating body 20, thereby suppressing the vertical oscillation of the column 2 with respect to the floating body 20.

(8) In some embodiments, in any one of the above configurations (4) to (7), the plurality of second support wires may be tensioned.

The above configuration (8) makes it difficult for the column 2 as the structure to move with respect to the floating body 20 in the direction in which the column 2 falls over, so that the column 2 can be stably supported by the floating body 20.

(9) In some embodiments, in the above configuration (3), the floating structure may include an annular member 25 surrounding the column 2 as the structure and attached to the linking member 22 so that the annular member 25 is in non-contact with the column 2 as the structure.

With the above configuration (9), since the annular member 25 is attached to the linking member 22 to reinforce the linking member 22, the design strength of the linking member 22 can be suppressed.

With the above configuration (9), contact between the column 2 as the structure and the annular member 25 can be suppressed even when the column 2 oscillates. In addition, if a larger-than-expected load acts on the column 2 and the annular member 25 contacts the column 2, the annular member 25 will also support the column 2, thereby suppressing the oscillation of the column 2 even if a larger-than-expected load acts on the column 2.

(10) In some embodiments, in any one of the above configurations (2) to (9), the floating structure may include an annular member 25 surrounding the column 2 as the structure and attached to the floating body 20 so that the annular member 25 is in non-contact with the column 2.

With the above configuration (10), contact between the column 2 as the structure and the annular member 25 can be suppressed even when the column 2 oscillates. In addition, if a larger-than-expected load acts on the column 2 and the annular member 25 contacts the column 2, the annular member 25 will also support the column 2, thereby suppressing the oscillation of the column 2 even if a larger-than-expected load acts on the column 2.

With the above configuration (10), if the floating structure 10 has, for example, two or more buoyant bodies 21, the buoyant bodies 21 can be connected to each other via the annular member 25. Further, if two or more buoyant bodies 21 are connected and secured to each other by the linking member 22, the annular member 25 can reduce the load on the linking member 22, and the design strength of the linking member 22 can be suppressed.

(11) In some embodiments, in any one of the above configurations (1) to (10), the structure may be a column 2 of an offshore structure 1.

With the above configuration (11), it is possible to reduce the cost of the floating structure 10 in the offshore structure 1.

(12) A method of assembling a floating structure according to at least one embodiment of the present disclosure includes a step S 1 of placing a plurality of first support wires 14 between a column 2 as a structure and a floating body 20 including one or more buoyant bodies 21 disposed around the column 2 so as to transmit the self-weight of the column 2 to the floating body. The step S 1 of placing the plurality of first support wires 14 includes connecting one end 14a of each of the first support wires 14 to the floating body 20 and connecting another end 14b of each of the first support wires 14 to the column 2 below the one end 14a.

With the above method (12), the floating structure 10 can be assembled by a process that is relatively easy to implement, so that the installation cost of the floating structure 10 can be reduced.

(13) In some embodiments, in the above method (12), the method may include a step S7 of connecting a plurality of second support wires 15 to the column 2 as the structure above the one end 14a to prevent the column 2 as the structure from falling over.

With the above method (13), the risk of the column 2 as the structure falling over is reduced.

(14) In some embodiments, in the above method (13), the method may include: a step S5 of prohibiting relative movement of the column 2 as the structure and the floating body 20 prior to the step S7 of connecting the plurality of second support wires 15 to the column 2 as the structure; and a step S9 of lifting the prohibition on relative movement of the column 2 as the structure and the floating body 20 after the step S7 of connecting the plurality of second support wires 15 to the column 2 as the structure.

With the above method (14), the second support wires 15 can be easily connected to the column 2 as the structure.

### Reference Signs List

- 1: Offshore structure
- 2: Column
- 10: Floating structure
- 13: Support base
- 14: First support wire
- 14a: One end
- 14b: Other end
- 15: Second support wire
- 15a: Proximal end
- 15b: Distal end
- 20: Floating body
- 21: Buoyant body
- 22: Linking member
- 25: Annular member
- 27: Connecting member

## Claims

1. A floating structure, comprising:
a floating body including one or more buoyant bodies disposed around a structure; and
a plurality of first support wires disposed between the structure and the floating body and configured to transmit a self-weight of the structure to the floating body,
each of the first support wires having:
one end connected to the floating body; and
another end connected to the structure below the one end.

2. The floating structure according to claim 1, comprising a plurality of second support wires connected to the structure above the one end and configured to prevent the structure from falling over.

3. The floating structure according to claim 2,
wherein the one or more buoyant bodies includes at least a first buoyant body and a second buoyant body, and
wherein the floating body has a linking member linking and securing the first buoyant body and the second buoyant body.

4. The floating structure according to claim 2 or 3,
wherein each of the plurality of second support wires has a proximal end and a distal end,
wherein each proximal end is connected to the buoyant body above the one end, and
wherein each distal end is connected to the structure above the one end.

5. The floating structure according to claim 3,
wherein each of the plurality of second support wires has a proximal end and a distal end,
wherein each proximal end is connected to the linking member above the one end, and
wherein each distal end is connected to the structure above the one end.

6. The floating structure according to claim 4,
wherein a height position of the distal end is substantially the same as a height position of the proximal end.

7. The floating structure according to claim 4,
wherein a height position of the distal end is higher than a height position of the proximal end.

8. The floating structure according to claim 4,
wherein the plurality of second support wires are tensioned.

9. The floating structure according to claim 3, comprising an annular member surrounding the structure and attached to the linking member so that the annular member is in non-contact with the structure.

10. The floating structure according to claim 2 or 3, comprising an annular member surrounding the structure and attached to the floating body so that the annular member is in non-contact with the structure.

11. The floating structure according to any one of claims 1 to 3,
wherein the structure is a column of an offshore structure.

12. A method of assembling a floating structure, comprising a step of placing a plurality of first support wires between a structure and a floating body including one or more buoyant bodies disposed around the structure so as to transmit a self-weight of the structure to the floating body,
the step of placing the plurality of first support wires includes connecting one end of each of the first support wires to the floating body and connecting another end of each of the first support wires to the structure below the one end.

13. The method of assembling a floating structure according to claim 12, comprising a step of connecting a plurality of second support wires to the structure above the one end to prevent the structure from falling over.

14. The method of assembling a floating structure according to claim 13, comprising:
a step of prohibiting relative movement of the structure and the floating body prior to the step of connecting the plurality of second support wires to the structure; and
a step of lifting the prohibition on relative movement of the structure and the floating body after the step of connecting the plurality of second support wires to the structure.
